# EUROPEAN PATENT SPECIFICATION

(11) **EP 2 317 256 B1**
(45) Date of publication and mention of the grant of the patent: **19.04.2017**
(21) Application number: 08778968.1
(22) Date of filing: 19.06.2008
(51) Int. Cl.: F25D 3/11, A23L 3/375, A23B 4/09

(54) **EQUIPMENT FOR ULTRA-RAPID FREEZING OF FOODS THROUGH DIRECT METERED CONTACT WITH LIQUID NITROGEN**
AUSRÜSTUNG FÜR ULTRASCHNELLES GEFRIEREN VON LEBENSMITTELN DURCH DIREKTEN DOSIERTEN KONTAKT MIT FLÜSSIGSTICKSTOFF
ÉQUIPEMENT POUR LA CONGELATION ULTRA-RAPIDE D'ALIMENTS PAR CONTACT DIRECT DOSÉ AVEC DE L'AZOTE LIQUIDE

(43) Date of publication of application: 04.05.2011
(73) Proprietor: Maccise Sade, Yamil Adiv, C.P. 77500, Cancún Quintana Roo (MX); Rioseco Orihuela, Maurício, C.P. 77500, Cancún Quintana Roo (MX)
(72) Inventor: Maccise Sade, Yamil Adiv, C.P. 77500, Cancún Quintana Roo (MX); Rioseco Orihuela, Maurício, C.P. 77500, Cancún Quintana Roo (MX)
(74) Representative: Knapheide, Timo
(86) International application number: PCT/MX2008/000078
(87) International publication number: WO 2009/154435

(56) References cited:
- EP-A2- 1 808 086
- WO-A1-2008/034558
- US-A- 4 059 424
- US-A- 4 171 625
- US-A- 4 171 625
- US-A- 6 070 416
- US-A1- 2004 099 005
- US-A1- 2006 070 393
- US-A1- 2006 283 196

## Description

### TECHNICAL FIELD

This invention is related to food freezing processes, and specifically it refers to freezing equipment operating with liquid nitrogen, for food confined in a container destined for distribution to final consumer, in order to preserve the food so frozen.

### BACKGROUND OF THE INVENTION

Storing of food for long time periods has several difficulties that must be solved. Food can be stored at environmental temperature for a very short and limited time and, in general, it is not possible to store food for a long time even at low temperature.

To allow the storing of food for relatively long periods of time and in particular at environmental temperature or in some cases, at low temperatures, it is required to prevent food deterioration- caused by microorganisms growing, such as bacteria, fungi, etc. Growing of such organisms in food can depend of the presence of water in the food as well as of the conditions such as storing temperature, environmental temperature, etc. Growing of microorganisms, including bacteria, is accelerated al environmental or higher temperature, in such a way that the velocity of food deterioration is increased at higher temperatures, decaying in a shorter time period.

For that reason, food is stored at low temperature, wherein organisms have a low possibility to grow-up; multiplication of organisms can be controlled and deterioration of food can be prevent. However, storage of food in such low temperatures can produce new problems on the food, when frozen or refrigerated food is defrosted, as described below.

Nowadays the best option to maintain fresh or raw food for a certain time without causing deterioration is to freeze or refrigerate it and to maintain preserved in a cooling chamber.

Food freezing is a way of preservation based on the solidification of water content in it. For this reason it must be taken into account the water content in the product as a factor. The freezing latent heat depends on the water quantity. Other factors are the starting and ending temperature because they determine the amount of heat to be extracted from the product. In the field of food, freezing is defined as the application of intense cold capable to stop bacterial and enzymatic processes that destroy food.

Freezing of food consists in diminishing the water temperature (sensible heat) and further change of phase from liquid to solid (latent heat); because water is the major component (from 50 to 90%). Water freezing in food is more complex than in pure water, because the presence of structures that conforms the food itself: lipids, proteins, fiber, starch, sugars and water that modify freezing parameters.

As the first step of freezing, part of the water diminishes its temperature to reach the freezing point (0°C) and then small ice nuclei ("freezing seeds") begin to be produced. Ice starts to be formed around such nuclei and depending on freezing velocity, ice crystals could be elongated, end-softened, big, small, or be produced inside/outside of the cell. Depending on freezing velocity, the following phenomena could be present:
Protein denaturalization: Whenever the product has been frozen slowly, or fluctuation of temperature are present during storing, ice crystals produced extract the water linked to proteins when growing, in such a way that proteins are disorganized and they are incapable to recover the water when defrosted, so said water when lost, drags hydro-soluble nutrients. This process changes food texture, producing hardening and diminishing its solubility and nutritional value.
Starch retraction: Starch is made from glucose linear chains, called amylose, and complex branched-chain structures called amylopectin. Starch granules when in a cold suspension, tend to blow up, retaining water and when reach certain temperature, they gelatinize and thicken the liquid. When this gel rests, the amylose linear chains aggregate as if crystallize and liberate the water previously retained in its structure, a process called syneresis. That is why it is convenient to select starch in food with a very low rate of amylose. By example, rice has an amylose rate of 16%, corn has 24%, sorghum and tapioca have no amylose.
Lipid contraction: A lipid in solid state is called fat, whereas if it is in liquid state is called oil. Change of state from solid to liquid depends on the melting point of the lipid. If a food is frozen, oils solidify and they can contract.

Food with low percent of humidity, have a lower initial freezing point, because vapor pressure diminishes due to the solutes. It is not possible to freeze the entire content of water, because just the so called free water (around 75%) is frozen during the process.

### Types of freezing:

- By air: a cold air current extracts heat from the product until the final temperature is reached.
- By contact: a cold surface in touch with the product extracts the heat.
- Cryogenic: Cryogenic fluids, nitrogen or carbon dioxide, are used, replacing the cold air to reach the freezing effect.

### Freezing effects

Drying up: Approximately 80% of the total weight in an animal or even more in a plant, it is water. Water is the major component in food derived from animals and plants. When a food is frozen, water is transformed into ice and a drying up effect is produced.

Nucleation: When food is frozen at a normal atmospheric pressure, its temperature falls to 0°C, at this time water starts to convert into ice. It stills at that temperature by a while and when crystallization is complete, temperature descends until' equilibrates the environmental temperature. The time when there is not a drop of temperature is the time required to extract latent freezing heat (80cal/g). During this time the effect of the cold is equilibrated with heat liberated by water because the change of state. Temperature stills constant and produces a horizontal line in a graph, of which longitude depends on the velocity of heat dissipation. During this time there is a equilibrium between crystal forming and melting.

At beginning of the horizontal section, a light depression is observed, indicating an overcooling in water before crystallization starts (this is more noticeable in small volumes such as cells and microorganisms). This occurs with a great velocity of heat elimination and it assures a fast formation of ice crystals. Since water in food is not pure but it is a solution of salts, sugars and soluble proteins, and further a complex of protein molecules in colloidal suspension, its freezing pint is lower. This lowering is proportional to the concentration of dissolved elements. The most common food freezes between 0°C and -4°C. This zone is known as that of a maximum crystal formation zone. When water frozen, the concentration of dissolved elements in the rest of water is increased gradually, producing a higher descent in the freezing point.

Crystallization: In order to facilitate crystallization, it is needed the existence of a particle or insoluble salt acting as a crystallization nucleus. The lower the temperature, easier the phenomenon occurs, producing a higher number of crystal aggregates, and therefore, crystal size is lower. On the contrary, with a temperature close to the melting point, nucleation is slow, crystal nuclei are few and therefore, relatively large crystals result. Studying under microscope the shapes of ice crystals it is observed that a quick freezing produces crystals more or less rounded, while a slow freezing produces larger, elongated or needled crystals. This slow freezing has as consequence, breaking fibers and cell walls, and the food loses its properties. In solid or high viscosity food, size of crystals varies from zone to zone of the food. In peripheral zones, crystals are formed quickly and they have short size, whereas heat transfer inside is more difficult and crystals grown slowly, reaching larger sizes. When temperature reduces, reach a point in which the rest of water and concentrated solutes solidify together, in a saturation point, called eutectic point. Such a point is many times lower to that which many industrial freezers get, permitting small quantities of non-frozen water that allowing the survival of microorganisms, while it is not possible their growing and reproduction.

Changes in volume: Passing from liquid water to ice, includes an increase in volume close to 9%. Because this phenomenon, food rich in water expand more than those with lower content. This can cause fractures or cracks. It is important to consider it when producing the container, if the container is stretch.

Velocity of freezing: Quality in a frozen product depends on the velocity to which this has been frozen. Said velocity is defined as the minimum distance between the surface ant the critical point divided by the time in which the critical point has moved from 0°C to -15°C. Thus, a freezing process is characterized as:
- Slow: < 1cm/h, i.e. a domestic freezer with motionless air at -18°C. It is carried out basically in cold rooms, built and equipped to operate at low temperatures. The equipment offers an extra capacity for refrigeration, being further equipped with fans for air circulation. These systems have a low freezing velocity and they are used for products such as: margarines and steaks or carcasses which does not need high quality. Difficulties in this kind of freezing are: dehydration (between 5 and 10%) and frosts in product. Further, there are problems with cold balance, because if the chamber is saturated, the system is overloaded and it does not reach the desired freezing temperature.
- Medium: 1-5 cm/h, in a cold air tunnel at 20 km/h and -40 °C. These are equipments designed for high efficiency in air circulation, they reach very high heat transfer velocities and they have dehydration losses from 2 to 6% of product weight. The equipment must be selected according to characteristics of process and product. In this kind of freezing are integrated the Blast Freezer, Fluidized bed and Gyro freezer equipments.
   Blast Freezer. In this equipment, cold air is circulated at high velocity within a room with platforms arranged in a predetermined way. Almost all the products can be frozen with this equipment but freezing must be done until it is packed, in order to avoid dehydration or frosts.. It is used too for carcass meat freezing which is transported by rails. Fluidized bed: These equipments are used for small size products (they were originally designed for peas processing). In this equipment gusts of wind are projected upwards from the lower part, almost suspending the product, rotating it, to perform a homogeneous and quick freezing. The major problem of this equipment is that gusts of wind can spoil or frost the product because the high velocity and cold intensity.
   Gyro Freezer. This system is one of the most modern and efficient mechanical systems. In this equipment, turbulence is generated from fans designed to generate a uniform cold. Products rotates in a spiral band and it is cooled in periods from 45 min to 1 h. Due to the flow of air is not direct, it lesser spoils the product by dehydration (from 1% to 2%). As is a spiral system it does not need a high space. The only inconvenient for this kind of equipments use to be the initial costs for acquisition and installation.
- Fast. > 5cm/h, with immersion in liquid nitrogen. A quick freezing is carried out with liquid nitrogen at very low temperatures (-196°C), either by immersion or aspersion, depending on characteristics of the food. With this kind of freezing, a high Individually Quick Frozen (IQF) quality is obtained, where the pieces of food are separated and they not adhere to the band. This kind of freezing permits to maintain better quality of products than in others because of:
   ∘ It creates ice micro-crystals which not deform the cell, avoiding looses in texture and dehydration, maintaining the quality of product.
   ∘ Product is not deformed because there are not gusts of wind, and it dos not adhere to the band.

Storing effect: It has been demonstrated that a temperature of -18°C is a suitable and safe level to preserve frozen food. Microorganisms can not grow at this temperature, and action by enzymes is very slow, however, the storing itself produces alterations in the food:
Re-crystallization: During storing there is a tendency for the small crystals to join among them producing larger new ones. That is because small crystals are more unstable than larger crystals due to the higher energy per mass unit. This phenomenon is accentuated if the product is stored at temperatures near to 0°C. As lower the temperature is, smaller the effects, being almost negligible below of 60°C.
Cold Frosts: Any hot air entrance into the freezing chamber produces a temperature gradient between cold inside air and hot air penetrating. When air is heated, its humidity absorption capacity increases. In a freezing chamber, the only source of humidity available is the ice contained in the frozen food. Hot air takes humidity of the poorly protected food, dehydrating it. Then, the humidity is deposed on the cold surfaces of the freezer when air is cooled. The formation of ice from air humidity, without pass through liquid state is called sublimation.
Frosts by cold is a major surface desiccation in a frozen food, produced by the dehydration above. They appears in the surface of the product as dark stains when pigments are concentrating and oxidizing in the most superficial layers. Also appear white-greyish zones due to gaps left by ice after sublimation. If the phenomenon lasts enough, superficial layers begin to make spongy and inferior layers begin to dehydrate. If frost is small, the phenomenon is reversible by exposing to humidity and rehydration. This is verified by cooking a lightly frost zone. If on the contrary, frost has been deeper, oxidations have been produced and chemical changes are irreversible. It is therefore important to use a suitable packing capable to reduce 4 to 20 times, the loss of water. Cold frost causes an important loss of product and a loss of its value causes the organoleptic quality diminishes.

In the past and nowadays, food cryogenic freezing, although provides the best quality, harmlessness and shelf life to it, has been and it is used little because the high costs of gases, equipments and installations.

US 4171625 discloses an equipment for ultrafast freezing by using a cryogenic tunnel according to the preamble of claim 1.

### SCOPE OF THE INVENTION

In the view of limitations that have the developments proposed until now in the prior art, an object of the invention herein is to provide an ultrafast food freezing equipment by direct contact with dosed liquid nitrogen.

It is another object to provide an ultrafast food freezing equipment in a way to conserve its original properties and taste, without modification, when defrosted after preservation in a refrigerating chamber during a extended period of time.

Another object of the invention is to provide ah ultrafast cryogenic freezing equipment for food.

Still other object of the invention is to provide an ultrafast cryogenic food freezing equipment in which food can be introduced to the process as individual portions confined in a container for exhibition and sale.

Yet another object of the invention is to provide an ultrafast food freezing equipment that permits to establish a steady state production process, due to the food to be frozen can be contained in its final packing previous to sealing.

It is another object of the invention to provide an ultrafast food freezing equipment with maximum efficiency in the consumption of liquid nitrogen used.

Another object of the invention is to provide an ultrafast food freezing equipment in which freezing is obtained trough a fast and precise dosing of liquid nitrogen directly to product to be frozen.

It is still other object of the invention to provide an ultrafast food freezing equipment in which a precise dose of liquid nitrogen for such food is used.

Other object of this invention yet, it is to provide an ultrafast food freezing equipment with highly competitive costs.

These and other objects and advantages of the invention are going to be evident in the light of the following description, which is accompanied of a series of Figures for the preferred embodiments of the invention., which must be understand as made for illustrative purposes and not limitative of the teachings of the invention.

The objects of the invention are solved by the equipment according to claim 1.

### BRIEF DESCRIPTION OF THE INVENTION

In view of the previous developments, specially in the field of food preservation by freezing, it is needed a development of an equipment capable to reduce costs of cryogenic freezing in order to make it affordable to freezing food enterprises, so that to offer maximum quality, harmlessness and shelf life to market; equipment of the invention, hereinafter called UFGF (ultra-fast gravity freezing) has been developed to obtain high efficiency in the consumption of liquid nitrogen based on the quick and precise dosing of liquid nitrogen to the product to be frozen, resulting in highly competitive costs.

UFGF equipment of the invention represents a great improvement to the technology applied by the methods known nowadays to freeze food, which not provide quality and life shelf for the frozen product as the equipment of the invention.

An advantage of the equipment of the invention is that it not produces elongated crystals in the product because it uses dosed liquid nitrogen which gets quick and precise contact with the food, freezing the water molecules and forming micro-crystals which, due to their size, do not produce damages to the wall of the cells; this kind of freezing is obtained because the speed in the contact of the liquid nitrogen with the food (at -196°C or -325F) and because the dose in the exact quantity of the liquid nitrogen, as required by the objective food.

The equipment of the invention provides a series of advantages when provides a real ultrafast freezing; it not requires large spaces for install, it is light weighed, its costs are reasonably lower than those for conventional tunnels with equivalent capacity of processing which freezes by gas aspersion, where it is the gas and not the liquid that contacts the surface of the food to be frozen, delaying the freezing and producing crystals with sizes that can produce damages to the food cells.

UFGF technology is effective and optimizes the quality of the food, preserving their original properties such as vitamins, minerals and proteins, maintaining them without changes during freezing, transporting and storing, under suitable conditions, therefore the properties of the food maintains intact.

UFGF equipment not requires high investments in acquisition, installing or operation areas, compared to the high costs of the conventional cryogenic freezing equipments, such as gas aspersion tunnel or immersion tub, with costs up to 10 times higher than in the equipment of the invention.

Cost impact of cryogenic freezing, either by aspersion or immersion is from 15% to 50%, whereas in UFGF equipment it is 5% to 25% depending on the food to be frozen; the productive line in the case of aspersion or immersion is intermittent (batch), whereas in the UFGF it is continuous (steady state), avoiding costs for extra time and excess of personnel.

When comparing the areas for install and operate the equipments by aspersion and that of the invention, this one just requires 2 to 6 square meters, while the aspersion tunnel requires at least of 40 m².

### BRIEF DESCRIPTION OF THE FIGURES

For a better understanding of the advantages of the system of the invention, following is a series of Figures and drawings intended to show in an illustrative way, the characteristics of a preferred embodiment of the system, without intend to be limitative of it.
Figure 1 is a schematic illustration of a frontal view of a preferred embodiment of the invention.
Figure 2a is a schematic illustration of a lateral view showing the right side of the preferred embodiment of the equipment of the invention.
Figure 2b is a schematic illustration of a upper view of the bottom of the liquid nitrogen contention tank in the preferred embodiment of the equipment of the invention of Figures 1 and 2a.
Figure 3 is a schematic illustration of the phase separator in the preferred embodiment of the equipment of the invention in Figure 1.
Figure 4 is a schematic illustration of the front view of the preferred embodiment of the equipment of the invention in Figure 1, showing the main components.
Figure 5 is a schematic illustration of the front view of the preferred embodiment of the equipment of the invention in Figure 1, showing the main control components.

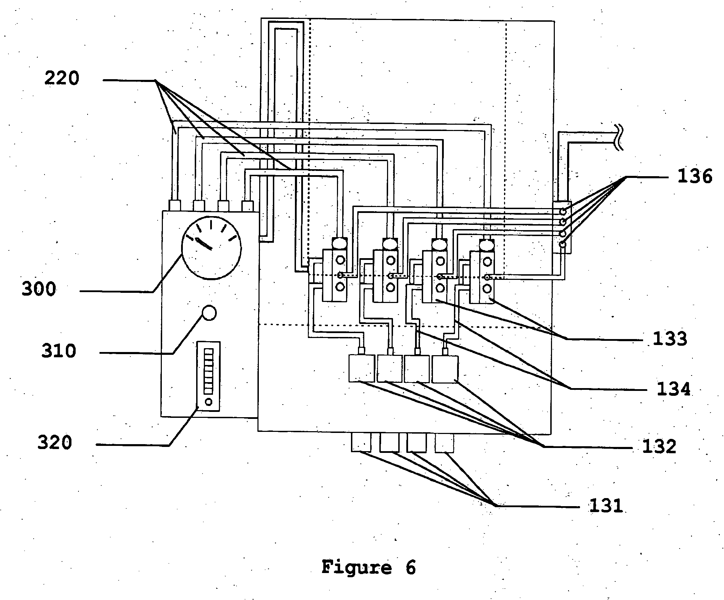

Figure 6 is a schematic illustration of the right side view of the preferred embodiment of the equipment of the invention in Figure 1, showing the main control components.
Figure 7 is a schematic illustration of the preferred embodiment of the equipment of the invention.
Figure 8 is a perspective view of a container capable to be used for freezing in the equipment of the invention.
Figure 9 is a schematic illustration of the container in Figure 8, showing the id of the discharge nozzles considered in the tests of dispensing for the equipment of the invention.
Figure 10 is a graph showing the variation in the amount of liquid nitrogen dispensed, as a function of the dispensing time, in a test for dispensing homogeneity of liquid nitrogen trough the nozzle.
Figure 11 is a graph showing the distribution of temperatures at two locations in an article processed with the equipment of the invention, as a function of the time, during and after the dispensing of liquid nitrogen.

### DETAILED DESCRIPTION OF THE INVENTION

The description below will be referred to the Figures referred above, that must be understood as illustrative of the preferred embodiment of the invention and not as limitative of the inventive concept. Common elements in Figures show the same numbers in all of them.

This invention is referred to an equipment for freezing of articles, preferably food, either raw or cooked, in groups of individual portions arranged and confined into a pack for public sale.

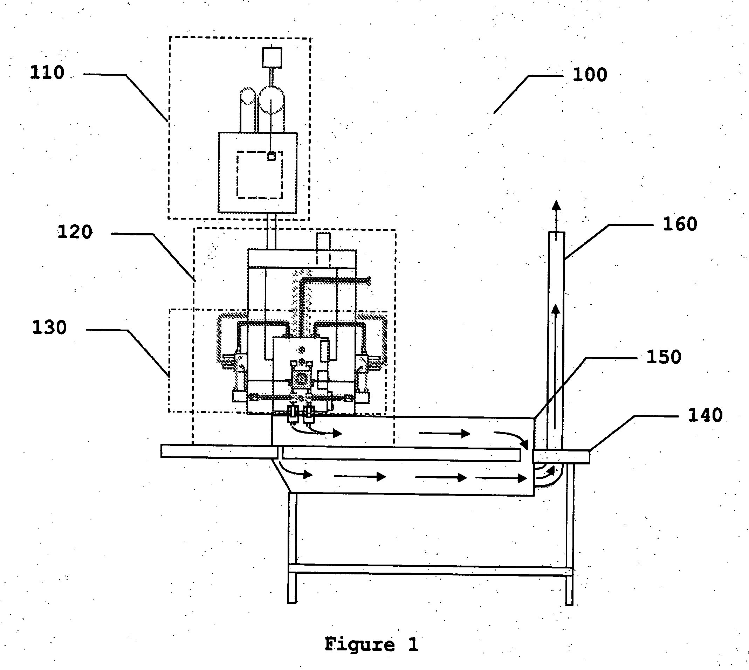

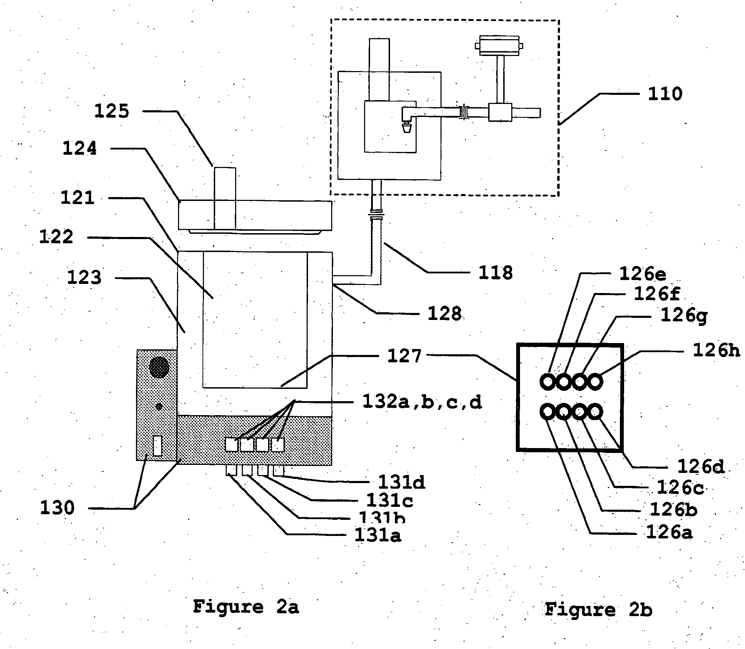

Figures 1 and 2 schematically illustrate an embodiment of the equipment of the invention, referred as a whole by number (100), comprising a phase separator (110), a dispensing zone for liquid nitrogen (120), control means for dispensing (130), a band (140) for conveying the material to be frozen towards and from the equipment, a tunnel type cold chamber (150), and an exit for nitrogen gas to the atmosphere (160).

In Figure 2 it is shown in detail, in a schematic illustration, the dispensing zone (120) for liquid nitrogen, comprising a vacuum isolated walls container (121) with vacuum isolated walls (123), defining a container (122) for liquid nitrogen under atmospheric pressure, thanks to a vent (125) open to atmosphere, located in the cap (124) covering the entrance of the vacuum isolated walls container (121); in the midst of cap and tank, if required, a seal to prevent leaks of nitrogen towards the work zone, where personnel stands, is used. Vacuum isolated walls container (121) has a bottom wherein a plurality of holes is located, for the exit of liquid nitrogen; in Figure 2b a preferred embodiment with 8 exits, referred by (126a), (126b), (126c), (126d), (126e), (126f), (126g) and (126h), is shown, being located in two parallel rows with 4 holes each and being correspondent by pairs.

Although Figure 2b illustrates the preferred embodiment of the equipment, with 8 exits useful for liquid nitrogen, in practice, the equipment can be designed to satisfy the requirements by user, adding or reducing holes or modifying its layout, to adapt to that of the food container to be frozen; it is possible too, as described below, to use just a subset of the total available holes, for a specific application.

Turning back to Figure 2a, underneath the vacuum isolated walls container (121) and as a part of the dispensing zone, means (130) for control of dispensing are located; the area being isolated with high density polyurethane foam inside. It can be seen in the lower part of the Figure, 4 protrusions representing the nozzles (131a), (131b), (131c) and (131d) which correspond to holes (126a), (126b), (126c) and (126d), respectively; behind these nozzles there is another identical set corresponding to parallel holes (126e), (126f), (126g) and (126h). Each nozzle is associated to a solenoid actuated cryogenic needle valve (not showed); each cryogenic valve being controlled by an actuator, preferable of the pneumatic type, (132a), (132b), (132c) and (132d), respectively, in the illustrated view.

Control means are complemented with devices for detection, transmission, display and control of other variables, such as a level indicator (300) for nitrogen inside the vacuum isolated walls container (121), liquid nitrogen level regulator (310), and nitrogen gas flowmeter (320).

Feeding of liquid nitrogen into the vacuum isolated walls container (121) is carried out from the phase separator (110) trough the feed hole (128) in the upper zone of the vacuum isolated walls container (121).

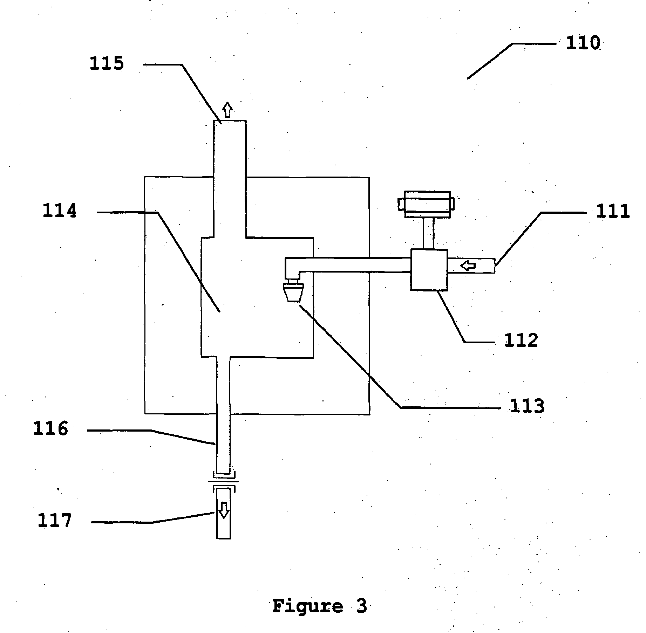

Referring now to the phases separator (110), schematically illustrated in detail in Figure 3, it has a liquid nitrogen feed from a storage tank (not illustrated) through a tube header (111), through a control cryogenic valve (112) up to a discharge (113) which permits the liquid nitrogen entry into the chamber (114) wherein the liquid nitrogen remains at ambient pressure while the vent of gas is permitted through the exit (115), maintaining an adequate level of liquid nitrogen to be fed, through the inferior duct (116) to the dispensing section (120); finally the liquid nitrogen goes to the dispensing zone (120) through the duct (117).

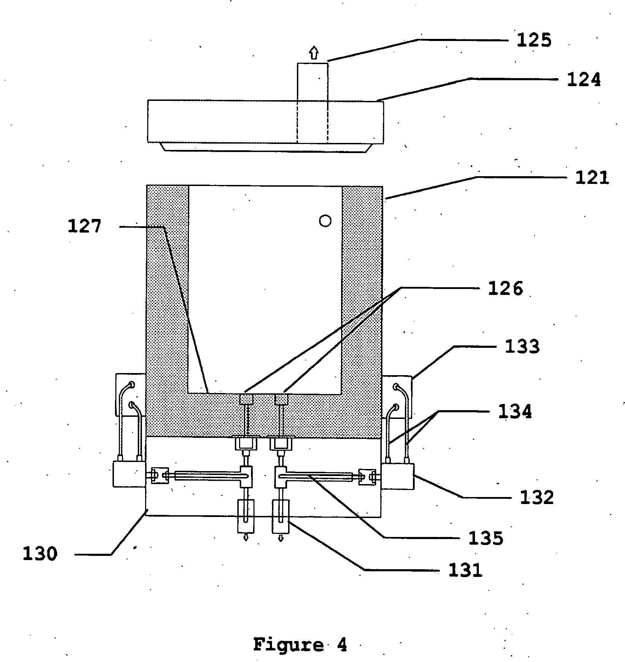

In the dispensing zone (120), as illustrated in Figure 4, the liquid nitrogen is dispensed from the vacuum isolated walls container (121) at atmospheric pressure by simple gravity flow of liquid nitrogen through the holes (126) in the bottom (127) of the vacuum isolated walls container (121), towards the plurality of nozzles (131) that permit the liquid nitrogen directly pass to the center of the upper surface of each article to be frozen, which in case of food, corresponds to one individual portion. The level of liquid nitrogen in the vacuum isolated walls container (121) determines the hydrostatic pressure on the bottom of the tank and so, the amount of liquid nitrogen passing towards the nozzles (131) from the holes (126) per time unit; hence the importance to maintain control on said level, as indicated below.

In order to have an efficient freezing, it is necessary that the dispensing of liquid nitrogen be done in a sufficient quantity to guarantee the food portion freezing; determination of the quantity to be dispensed will depend on the nature and properties of the product to be frozen, which as described above, are critical in case of food, in order to guarantee that its nutritional and organoleptic characteristics are not altered during the process or during the storing in cold chambers. Being extremely critic in this regard, the equipment has been equipped with a very precise control system for quantity of liquid nitrogen that is permitted to reach the article or articles to be frozen; thus, in Figures 4,to 7 said control system is illustrated.

With reference to Figure 4, illustrating the basic elements of the control system for liquid nitrogen; the elements described are common to each one of the exits of liquid, so they are referred as a whole by its main number, i.e. (131), without any reference to the letter which differentiates its position, (131a), (131b), etc., so, there is a plurality of nozzles (131) to discharge the liquid nitrogen flowing by action of gravity from the vacuum isolated walls container (121) at atmospheric pressure; the nitrogen going out though the holes (126) located in the bottom (127); the flow of liquid nitrogen up to the nozzles (131) is stopped by the action of the cryogenic valves (135) preferably of the type of needle valves, with its active elements made of stainless steel; cryogenic valves are located with its stem horizontally oriented, so the liquid nitrogen flows vertical and downwardly when the cryogenic valve (135) is operated; each cryogenic valve (135) is calibrated to discharge a certain quantity of liquid nitrogen per time unit and it is actuated by a pneumatic actuator (132) with air suppliers (134) for opening/closing; air supply to the actuators is offered by a 5-ways solenoid valve (133).

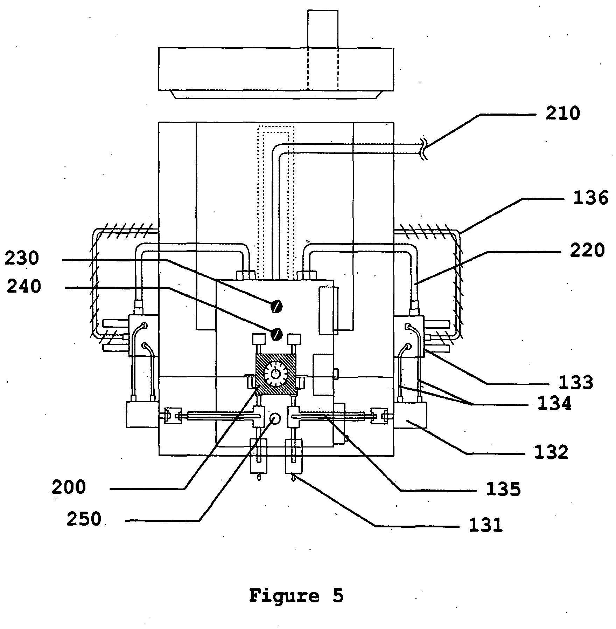

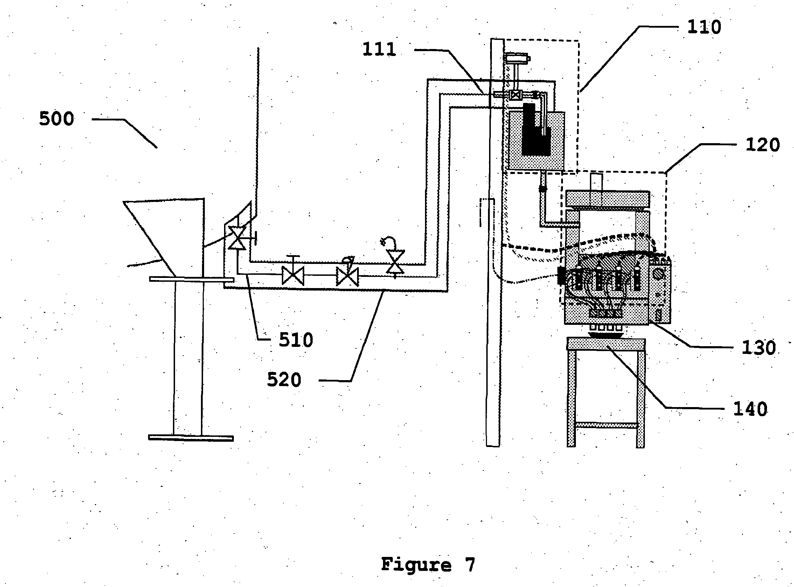

Operation of 5-ways solenoid valves (133) is based on successive open/close periods, electrically controlled by a time controller (200) or timer, in which the operator can select the opening time. Figure 5 illustrates the electric lines with a double solid line, i.e. the main source (210) and operation lines (220) for 5-ways valves; the pneumatic lines (136) for feeding the solenoid valves (133) are crossed by oblique lines. Control means further include a general switch (230) and an actuator (240) for the cryogenic valve (112) for feeding of liquid nitrogen from the tube header (111) coming from a storage tank (referred by number (500) in Figure 7).

In a simple embodiment of the equipment, time control (200) is set by hand and the start of any freezing cycle for a container is made by hand too, once the operator locates said container in position under the set of nozzles (131). Starting the timer (200) and therefore discharging the liquid nitrogen is made when the actuator button (250) is pressed.

Note that the bottom of the vacuum isolated walls container (121) is leveled, so the height of liquid nitrogen is uniform at any point, guaranteeing a uniform hydrostatic pressure, as demonstrated in comparative tests performed to determine the potential flow differential done among the eight nozzles in the test equipment. Variations in the level of liquid nitrogen in the tank are maintained at minimum by a level regulator (310).

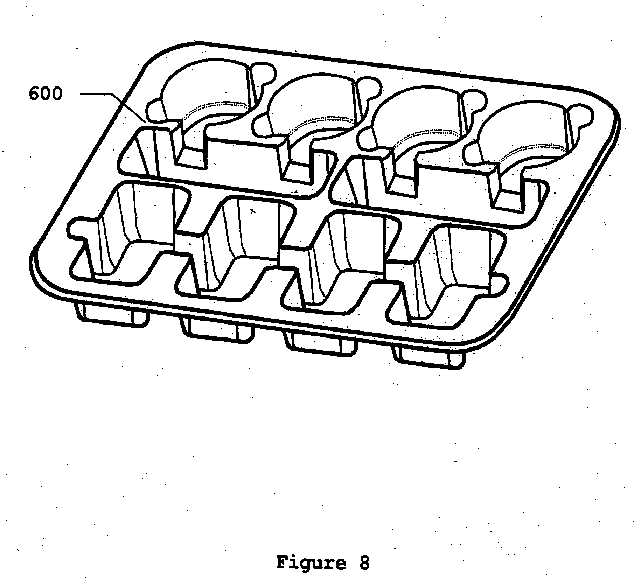

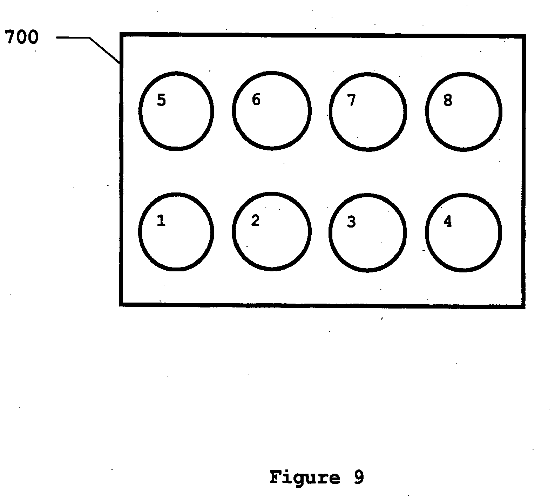

The test consisted in dispensing liquid nitrogen through the eight nozzles, in an arrangement corresponding to the operation of an equipment with food to be frozen confined in a tray type container (600), such as that in Figure 8, described in the International application WO 2007/011199 (Maccise, 2007), with nozzles located on the center of each cavity and numbered according to the template (700) in Figure 9. Results are in Table 1, following:

**Table 1. Test for homogeneity in quantity of nitrogen dispensed through eight nozzles in the test equipment.**

| **TIME (S)** | **DISPENSED LIQUID NITROGEN (kgX1000) PER NOZZLE** | | | | | | | |
|---|---|---|---|---|---|---|---|---|
| | **1** | **2** | **3** | **4** | **5** | **6** | **7** | **8** |
| **1** | 5.0 | 5.0 | 5.0 | 5.0 | 5.0 | 5.0 | 5.0 | 5.0 |
| **2** | 10.0 | 10.0 | 10.0 | 9.0 | 9.0 | 10.0 | 10.0 | 10.0 |
| **3** | 15.0 | 16.0 | 16.0 | 16.0 | 15.0 | 15.0 | 16.0 | 16.0 |
| **4** | 21.0 | 21.0 | 21.0 | 22.0 | 22.0 | 22.0 | 22.0 | 22.0 |
| **5** | 30.0 | 31.0 | 32.0 | 29.0 | 31.0 | 32.0 | 32.0 | 30.0 |
| **6** | 38.0 | 38.0 | 38.0 | 37.0 | 38.0 | 39.0 | 38.0 | 37.0 |
| **7** | 50.0 | 51.0 | 51.0 | 51.0 | 52.0 | 51.0 | 52.0 | 53.0 |
| **8** | 59.0 | 60.0 | 59.0 | 60.0 | 60.0 | 59.0 | 60.0 | 59.0 |
| **9** | 65.0 | 66.0 | 66.0 | 67.0 | 66.0 | 67.0 | 68.0 | 67.0 |
| **10** | 75.0 | 75.0 | 76.0 | 76.0 | 76.0 | 76.0 | 77.0 | 77.0 |

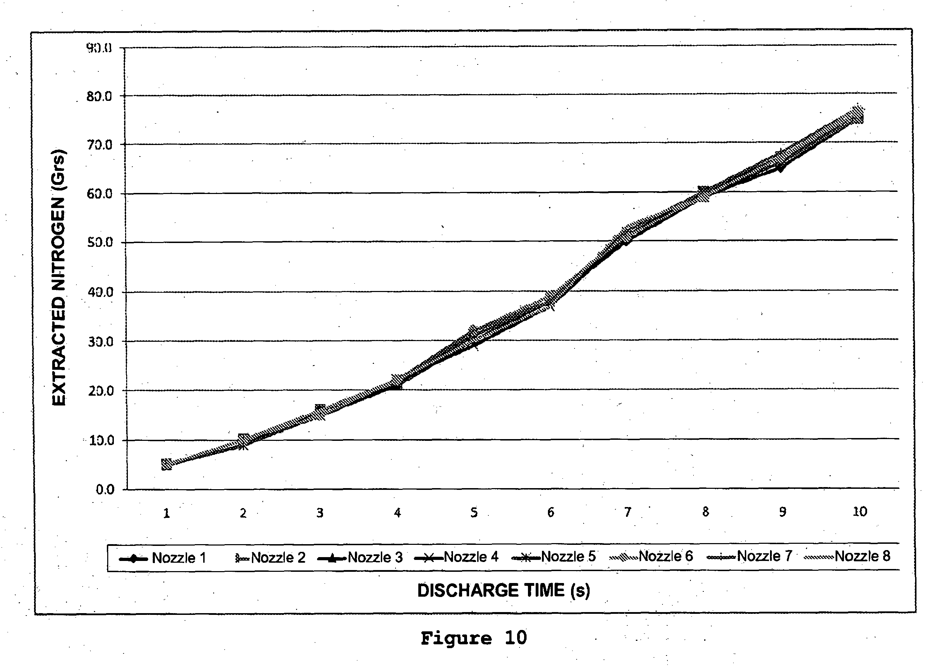

It is observed in the table 1 that measurements reflect uniformity in dispense; in the graph in Figure 10 it could be appreciated minimal variations in volumes dispensed.

The container for transport of articles to be frozen should be conformed in a way to each portion of food (or individual article) be confined in one cavity, narrow enough so as to guarantee that the article is located in the center of each cavity and guarantee therefore that each nozzle is located just on such center. The cavity can have any shape, but preferable must be one in which the article to be frozen be loose accommodated in it.

To locate the container in position, as illustrated in Figure 1, the equipment of the invention is completed with a transporter (140), i.e. of the kind of rollers, extending from a distance before the body of the equipment, enough to accommodate the container on it; the container is dragged until its position below the nozzles (131) for freezing, and then it is carried out to the next section of the process of food.

In a test to determine the profile of temperature produced with the passing through the wall isolated chamber (150), samples of sushi-rolls were frozen, putting a thermocouple "1" in the center of the roll, and a thermocouple "2" in the interior wall of the most outer layer of the roll. Details are indicated in Table 2, following; it is important to point out that the sampled roll was frozen in a container with other 6 rolls, so the data in Table 2 are values for 7 complete rolls.

**Table 2 Test Parameters for the example**

| **Roll w/thermocouple** | **Time LN2** | **Thermocouples** | **Test Time** | **Temp Environm** |
|---|---|---|---|---|
| Spicy Surimi | 25 s | 1 center | 30 min | 7°C |
| | 1.650 kgs | 2 int. wall | | |
| | 1.4223 m³ | | | |

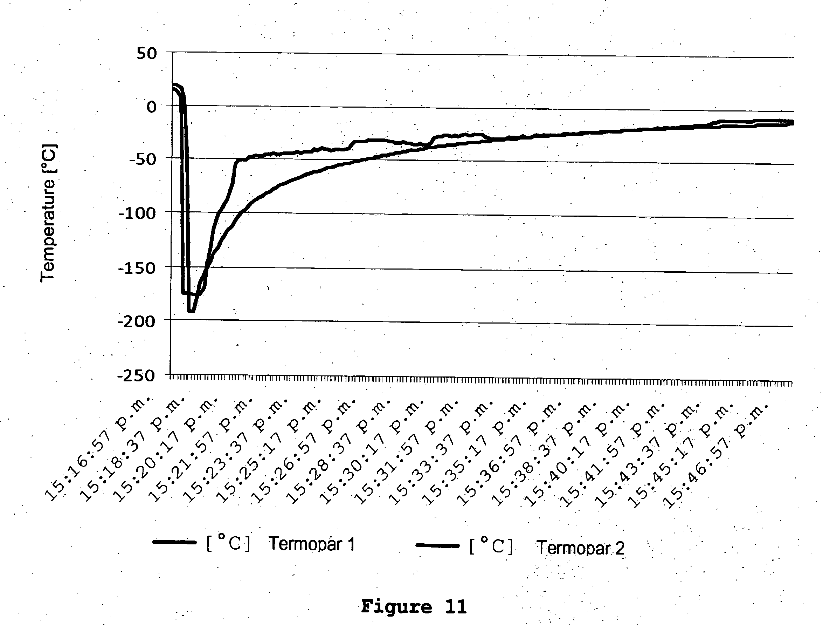

A predefined dose of liquid nitrogen, suitable for freezing a complete roll with characteristics of the ingredients used to prepare it, is applied for 25 seconds with the results in Figure 11; observing the high impact I temperature and time to take down until temperatures below -170°C and the increasing time, delayed to reach a -21°C temperature in a 15 minutes period, exposing the product to a environmental temperature of 7°C, providing time enough to handle the product up to the end of the process without physical changes.

In the preferred embodiment of the invention, the transporter (140) is used to produce a wall isolated cold chamber (150), inside of which it is permitted to produce a nitrogen-rich and oxygen-poor atmosphere, with a temperature low enough so as to permit the liquid nitrogen contacting the processed object to continue cooling it (as a function of the characteristics of the product itself), maintaining the temperature distribution profiles in the frozen article.

Transporter (140) has a slot (160) through which the nitrogen gas, produced by the thermal shock between the liquid leaving the nozzles (131) and the surrounding air or the surface of the article to be frozen and the container, is drawn; the suction (provided by a extractor connected to the exit duct (190) of the chamber (150)), produces a curtain at the entrance to the chamber (150) preventing the diffusion of nitrogen gas to areas occupied by personnel; the nitrogen gas produced, is further guided along the chamber (150) above and below (180) of the frozen containers, as indicated by arrows; the cold chamber (150) is limited in the distal end of the freezing point by a slot (170) with an equivalent function to the slot (160) described before. Nitrogen gas is extracted through a duct (190) connected to an extractor (not illustrated) to be vented to atmosphere.

Figure 7 is a schematic diagram illustrating the installation required to operate the equipment (100) of the invention, including the deposit tank for liquid nitrogen (500), a valve train (510) to.regulate the flow of liquid nitrogen up to the tube header for feeding (111) to the phases separator, and the isolation required (520) to reduce looses of cold by transference to environment. Observe that with the equipment of the invention and an installation as the illustrated, the requirements of liquid nitrogen are diminished, as well as the personnel, premises and space, reducing the associated costs.

From the functional point of view, the equipment proposed in the invention is comparable in performance, and improves the equipment existing at present in the market, and conventionally used for the same kind of activities, such as equipments based on immersion tubs. In tests carried out to compare performances, there were obtained the results shown in Table 3:

**Table 3 Comparative analysis of the use of liquid nitrogen for the same basis of processed product.**

| | **Immersion tub** | **Equipment of the invention** |
|---|---|---|
| Kg of product | 7,500 | **7,500** |
| net consumption LIN (m3) | 19,983 | **15,112** |
| rate m3/kgs | 2.664 | **2.015** |

Some advantages determined for the equipment of the invention, among others and from the point of view of the food processed are as follows:
- It remarkable improves the quality in any frozen food, due to the direct contact between the liquid nitrogen and the food to be frozen.
- Nutrimental properties in the food remain intact, and because of the low cryogenic temperature and speed of freezing, food stays innocuous at all.
- Shelf life substantially increases compared to that of any other type of freezing, preserving the original characteristics and properties of the food.
- It creates ice micro-crystals which not harm the membrane of the food cell, preserving the original characteristics and properties of food.
- It permits to dispense precise liquid nitrogen doses required by food to be frozen.
- Due to the ultrafast dosing, freezing of the food considerably reduces to times in the order of few seconds depending on the heat transfer velocity and quantity of food.
- It permits to establish a steady-state production line, because e the food to be frozen can be contained in its final packing.
- It offers high security, since there is not risk to direct contact by operators with liquid nitrogen.
- It significantly reduces loss of product since eliminates the contact once it is frozen within its final packing.

Some advantages regarding the investment required:
- It noticeably reduces the investment since the costs of equipment and installation represent between 30% and 40% of the investment costs in equipments at present.
- It reduces the size of the operation space to be used up to 80% off from that required by equipments at present.

Some advantages regarding operation costs:
- It reduces freezing cost since the consumption of liquid nitrogen to be used is precisely dosed to avoid an excessive consumption for losses to environment, mainly.
- It significantly reduces losses of product since it diminishes the handle of it, increases efficiency and productivity in freezing due to exactness in dosing of liquid nitrogen as required.

The previous description of the invention is based in a preferred embodiment, for illustrative purposes, wherein the equipment includes eight nozzles for dispensing of liquid nitrogen; however, it could be clear for a skilled person in the technical field, that it is possible to carry out modifications to said preferred embodiment in such a way to fit the equipment to specific operation conditions for each particular user. By example, in the illustrated embodiment with eight nozzles, it is possible to temporarily close some of them, to operate a lower number, say 4. In a similar way, an equipment originally fit up for operating a dozen of nozzles could be adapted for a lower number, i.e. 10, 8, 6, 4 or 2 nozzles, without being limitative in a decrease by pairs.

Since the hydrostatic charge in the bottom of the vacuum isolated walls container in the dispensing zone is uniform, location of holes and so of the associated nozzles could be modified "from factory" to fulfill particular applications. It is further possible to modify the geometry of the vertical wall of the tank to adopt a cylindrical shape, or a flat-bottom regular prism, without a noticeable effect on the distribution profiles for liquid nitrogen towards the nozzles.

It is clear too that hand operations described regarding the illustrated equipment in the preferred embodiment, can be replaced for automatic controls, permitting the establishment of high-volume production lines.

These and other modifications that can be evident to a skilled person in the field should be considered within the scope of the inventions, in the light of the following claims.

## Claims

1. An equipment (100) for ultrafast food freezing by liquid nitrogen comprising:
a. a phases separator (110),
b. a cryogenic valve (112) to feed liquid nitrogen to the phases separator,
c. a dispensing zone (120) for liquid nitrogen,
d. dispensing control means (130)
e. a transporter (140) to carry the material to be frozen towards and from the dispensing zone (120) of the equipment,
f. a cold chamber (150) comprising a first end at which the product to be frozen enters, and a second end at which the frozen product exits, and
g. a vent (160) for nitrogen gas to the atmosphere,
wherein the liquid nitrogen is fed from a tank (500) to the phases separator (110) at atmospheric pressure trough the cryogenic valve (112), creating a liquid phase and a gas phase from the fed liquid nitrogen; the gas phase is vented to atmosphere; the transporter (140) transporting the product to be frozen outside the dispensing zone (120) and further into the cold chamber (150) in which the remaining nitrogen around the product is vaporized to produce a cold atmosphere in the cold chamber (150); at the second end of the cold chamber (150), nitrogen gas is vented to atmosphere through the vent (160) and the product exits from the equipment (100), **characterized in that** the liquid nitrogen is fed to and maintained in a vacuum isolated walls container (121) under atmospheric pressure in the dispensing zone (120) before it is dispensed on the product to be frozen; flow of liquid nitrogen from the vacuum isolated walls container (121) to the product to be frozen is carried out through a plurality of nozzles (131) by simple gravity effect and controlled by control means (130) allowing dosing of a predetermined amount of liquid nitrogen to be dispensed; the nozzles (131) located near the first end of the cold chamber (150) to dispense liquid nitrogen directly on the product to be frozen, confined in its final packing, soon after the product enters the cold chambers (150).

2. The equipment for ultrafast food freezing by liquid nitrogen, according to claim 1, wherein the liquid nitrogen fed to the phases separator (110) is pressurized, and a separation of phases is produced by reduction of pressure until atmospheric pressure.

3. The equipment for ultrafast food freezing by liquid nitrogen, according to claim 1, wherein the liquid nitrogen from the phases separator (110) is fed by gravity to the vacuum isolated walls container (121) in the dispensing zone (120).

4. The equipment for ultrafast food freezing by liquid nitrogen, according to claim 3, wherein the vacuum isolated walls container (121) in the dispensing zone (120) is double walled with vacuum isolation.

5. The equipment for ultrafast food freezing by liquid nitrogen, according to claim 3, wherein the vacuum isolated walls container (121) in the dispensing zone (120) has flat bottom (127).

6. The equipment for ultrafast food freezing by liquid nitrogen, according to claim 5, wherein said flat bottom (127) in the vacuum isolated walls container (121) includes a plurality of exit holes (126) connected to respective dispensing nozzles (131).

7. The equipment for ultrafast food freezing by liquid nitrogen, according to claim 6, wherein said holes (126) are distributed in such an arrangement that each hole is located over each cavity of a tray containing the food to be frozen within a multiplicity or pairs of cavities.

8. The equipment for ultrafast food freezing by liquid nitrogen, according to claim 7, wherein the exit holes (126) are distributed in the bottom (127) of the vacuum isolated walls container (121) in an arrangement that permits to select the holes (126) and respective dispensing nozzles (131), on different patterns that correspond to each cavity in a container with a multiplicity of cavities containing the food to be frozen, in order to dispense liquid nitrogen through said selected holes/nozzles (126/131).

9. The equipment for ultrafast food freezing by liquid nitrogen, according to claim 8, wherein each hole in the bottom (127) of the vacuum isolated walls container (121) is connected with a respective nozzle (131) for dispensing liquid nitrogen to the food to be frozen, through a valve (135), in order to control the pass of the flow.

10. The equipment for ultrafast food freezing by liquid nitrogen, according to claim 9, wherein the exit of liquid nitrogen through each nozzle (131) can be controlled in such a way to permit dispensing of the liquid nitrogen only through the nozzles (131) located over food products to be frozen in a container with one or a multiplicity of cavities for food products.

11. The equipment for ultrafast food freezing by liquid nitrogen, according to claim 10, wherein flow per time unit passing through each set of hole (126), valve (135) and nozzle (131) is approximately the same in all of them.

12. The equipment for ultrafast food freezing by liquid nitrogen, according to claim 11, wherein the quantity of liquid nitrogen flowing through each nozzle (131) is determined by the time that the cryogenic valve (135) is open.

13. The equipment for ultrafast food freezing by liquid nitrogen, according to claim 9, wherein the cryogenic valves (135) for flow control are made of stainless steel.

14. The equipment for ultrafast food freezing by liquid nitrogen, according to claim 9, wherein each one of the cryogenic valves (135) for flow control is actuated by an individual pneumatic actuator (132).

15. The equipment for ultrafast food freezing by liquid nitrogen, according to claim 9, wherein each one of the valves (135) for flow control includes a stem that is placed in a horizontal position, such as the liquid nitrogen flows vertically when the valve (135) is opened.

16. The equipment for ultrafast food freezing by liquid nitrogen, according to claim 14, wherein each one individual pneumatic actuator (132) is actuated by a five-ways pneumatic solenoid valve (133).

17. The equipment for ultrafast food freezing by liquid nitrogen according to claim 16, wherein the control means for dispensing (130), includes:
a. a switch for actuating a valve for feeding the liquid nitrogen to the phases separator (110),
b. a general switch for switching on/off the equipment (100);
c. a timer (200) for time control of the liquid nitrogen flowing to the nozzles (131);
d. a hand operated button actuator (250);
e. a level indicator for liquid nitrogen in the vacuum isolated walls container (121) in the dispensing zone (120);
f. a level regulator (310) for the liquid nitrogen in the in the dispensing zone (120); and
g. a flow meter (320) for nitrogen gas.

18. The equipment for ultrafast food freezing by liquid nitrogen, according to claim 17, wherein in an operation cycle, a discharge time for liquid nitrogen is set with the timer (200); when the operator button (250) is pressed, a signal is transmitted to operate each five-ways solenoid pneumatic valve (133) associated to each valve (135) for dosing, to open the valve (135) for the time set in the timer and close the valve (135) when the time is over, thereby dispensing a precise quantity of liquid nitrogen by each nozzle (131).

19. The equipment, for ultrafast food freezing by liquid nitrogen, according to claim 1, wherein the transporter (140) for the food product to be frozen, extends from a first end location under the dispensing zone (120), through the dispensing zone (120) and away towards a second end.

20. The equipment for ultrafast food freezing by liquid nitrogen, according to claim 19, wherein the transporter (140) comprises a conveyor band.

21. The equipment for ultrafast food freezing by liquid nitrogen, according to claim 19, wherein a cold chamber (150) is produced along the transporter (140), by isolating walls surrounding the transporter (140) in order to permit the formation of a nitrogen gas rich atmosphere.

22. The equipment for ultrafast food freezing by liquid nitrogen, according to claim 19, wherein the transporter (140) includes a slot (160) near the first end of the cold chamber (150) and another slot (170) near the second end of the cold chamber (150), through which the produced nitrogen gas is extracted beneath the transporter (140) by suction.

23. The equipment for ultrafast food freezing by liquid nitrogen, according to claim 22, wherein the suction through slots (160,170) produces a curtain, preventing the diffusion of the nitrogen gas outside the cold chamber (150) at the second end.

24. The equipment for ultrafast food freezing by liquid nitrogen, according to claim 22, wherein the nitrogen gas produced in the cold chamber (150) is guided through the cold chamber (150) over and under the transporter (140).

## Patentansprüche

1. Die Anlage (100) für ultraschnelles Lebensmitteleinfrieren mit Flüssigstickstoff umfasst:
a) Phasentrenner (110)
b) kryogenes Ventil (112) für die Abgabe von Flüssigstickstoff an den Phasentrenner,
c) Abgabezone (120) für Flüssigstickstoff
d) Abgabekontrollmechanismen (130)
e) Fließband (140), um das einzufrierende Material zur Abgabezone (120) zu transportieren und davon hinweg,
f) Kühlkammer (150), mit einem ersten Ende, wo das einzufrierende Produkt hereinkommt und einem zweiten Ende, wo das gefrorene Produkt herausgeht, und
g) Entlüftung (160) für Stickstoffgas in Richtung Atmosphäre,
worin der Flüssigstickstoff gefüllt wird von einem Tank (500) zu dem Phasentrenner (110) bei atmosphärischem Druck durch das Kryogenventil (112), wobei eine flüssige Phase und eine Gasphase geschaffen werden aus der Flüssigstickstoffversorgung; während der Gasphase wird an die Atmosphäre entlüftet, der Fließband (140) transportiert das einzufrierende Produkt außerhalb der Abgabezone (120) und weiter in die Kühlkammer (150), in der der zurückgebliebene Stickstoff verdampft wird und eine kühle Atmosphäre in der Kühlkammer (150) macht; am zweiten Ende der Kühlkammer (150) wird das Stickstoffgas von der Entlüftung (160) in die Atmosphäre entlüftet und das Produkt bewegt sich aus der Anlage (100) heraus, **dadurch gekennzeichnet, dass** der Flüssigstickstoff eingehüllt wird in einen vakuumwandisolierten Behälter (121) und unter atmosphärischem Druck in der Abgabezone (120) gelagert wird, bevor er auf das einzufrierende Produkt abgegeben wird; der Fluss des Flüssigstickstoffs von dem vakuumwandisolierten Behälter (121) zu dem einzufrierenden Produkt wird über eine Vielzahl von Düsen (131) mittels einfachem Schwerkrafteffekt durchgeführt und durch eine Kontrollvorrichtung (130) kontrolliert, welche die Dosierung einer vorprogrammierten Menge Flüssigstickstoff erlaubt bezüglich der Abgabe über die Düsen (131), die in der Nähe des ersten Endes der Kühlkammer (150) platziert sind, und auch um Flüssigstickstoff direkt auf das einzufrierende Produkt abzugeben, das bereits in seiner Endverpackung ist; bald nachdem das Produkt in die Kühlkammer geht (150).

2. Die Anlage für ultraschnelles Lebensmitteleinfrieren mit Flüssigstickstoff steht in Übereinstimmung mit Patentanspruch 1, wonach der Flüssigstickstoff, welcher in den Phasentrenner (110) eingespeist wird, zusammengepresst wird und anschließend eine Phasentrennung durch die Reduzierung des Drucks bis auf den atmosphärischen Druck bewirkt wird.

3. Die Anlage für ultraschnelles Einfrieren durch Flüssigstickstoff steht in Übereinstimmung mit Patentanspruch 1, wonach der Flüssigstickstoff vom Phasentrenner (110) per Schwerkraft zum Vakuumwandisolierten Behälter (121) in der Abgabezone (120) gelangt.

4. Die Anlage für ultraschnelles Einfrieren durch Flüssigstickstoff steht in Übereinstimmung mit Patentanspruch 3, wonach der vakuumwandisolierte Behälter (121) in der Abgabezone (120) doppelwandig ist mit Vakuumisolierung.

5. Die Anlage für ultraschnelles Einfrieren durch Flüssigstickstoff steht in Übereinstimmung mit Patentanspruch 3. wonach der vakuumwandisolierte Behälter (121) in der Abgabezone (120) einen flachen Boden (127) hat.

6. Die Anlage für ultraschnelles Einfrieren durch Flüssigstickstoff, ist in Übereinstimmung mit Anspruch 5, wonach der genannte flache Boden (127) im vakuumwandisolierten Behälter (121) eine Vielzahl von Löchern (126) hat, die mit entsprechenden Abgabedüsen (131) verbunden sind.

7. Die Anlage für ultraschnelles Einfrieren durch Flüssigstickstoff steht in Übereinstimmung mit Patentanspruch 6, wonach die genannten Löcher (126) in solch einem Arrangement angeordnet sind, dass jedes Loch über der entsprechenden Mulde an einem Tablett platziert ist, auf dem die Nahrung ist, die im Zusammenhang mit einer Vielzahl von Muldenpaaren eingefroren wird.

8. Die Anlage für ultraschnelles Einfrieren durch Flüssigstickstoff steht in Übereinstimmung mit Patentanspruch 7, wonach die Ausgangslöcher (126) am Boden (127) des vakuumwandisolierten Behälters (121) in einem solchen Arrangement angeordnet sind, das es erlaubt, die Löcher (126) und die dazugehörigen Abgabedüsen (131) mit verschiedenen Kombinationsmustern zu wählen; die Düsen sind jeder Mulde eines Behälters zugeordnet, mit einer Vielzahl von Mulden an der einzufrierenden Nahrung, damit Flüssigstickstoff durch die genannten, gewählten Löcher / Düsen (126/131) abgegeben wird.

9. Die Anlage für ultraschnelles Einfrieren durch Flüssigstickstoff steht in Übereinstimmung mit Patentanspruch 9, wonach jedes Loch im Boden (127) des vakuumwandisolierten Behälters (121) mit einer entsprechenden Düse (131) versehen ist für die Abgabe von Flüssigstickstoff an die einzufrierende Nahrung, mittels eines Ventils (135) für die Durchflusskontrolle.

10. Die Anlage für ultraschnelles Einfrieren durch Flüssigstickstoff steht in Übereinstimmung mit Patentanspruch 9, wonach das Austreten des Flüssigstickstoffs durch jede Düse (131) auf eine solche Weise kontrolliert werden kann, die eine Abgabe des Flüssigstickstoffs nur über die Düsen (131) erlaubt, die über den einzufrierenden Nahrungsmittelprodukten platziert sind, welche in einem Behälter mit einer oder einer Vielzahl von Vertiefungen für Nahrungsmittelprodukte versehenen sind.

11. Die Anlage für ultraschnelles Einfrieren durch Flüssigstickstoff steht in Übereinstimmung mit Patentanspruch 10, wonach der Fluss pro Zeiteinheit, welcher durch jedes Loch Set (126), Ventil (135). Düse (131) geht, bei allen von ihnen ungefähr derselbe ist.

12. Die Anlage für ultraschnelles Einfrieren durch Flüssigstickstoff steht in Übereinstimmung mit Patentanspruch 11, wonach die Menge des Flüssigstickstoffs, die durch jede Düse (131) geht, von der Zeit bestimmt wird, in der das Kryogenventil (135) geöffnet ist.

13. Die Anlage für ultraschnelles Einfrieren durch Flüssigstickstoff steht in Übereinstimmung mit Patentanspruch 9, wonach die kryogenen Ventile (135) für die Flusskontrolle aus Edelstahl gemacht sind.

14. Die Anlage für ultraschnelles Einfrieren durch Flüssigstickstoff steht in Übereinstimmung mit Patentanspruch 9, wonach jedes der kryogenen Ventile (135) für die Flusskontrolle über einen individuellen pneumatischen Aktor (132) in Betrieb gesetzt wird.

15. Die Anlage für ultraschnelles Einfrieren durch Flüssigstickstoff steht in übereinstimmung mit Patentanspruch 9, wonach jedes der Ventile (135) zur Flusskontrolle einen Stängel hat, welcher in horizontaler Position so geplant ist, dass der Flüssigstickstoff in vertikaler Richtung fließt, wenn das Ventil (135) geöffnet ist.

16. Die Anlage für ultraschnelles Einfrieren durch Flüssigstickstoff steht in Übereinstimmung mit Patentanspruch 14, wonach jedes der individuellen pneumatischen Pneumatik Aktor (132) von elektromagnetischen, pneumatischen 5-Weg-Ventilen (133) aktiviert wird.

17. Die Anlage für ultraschnelles Einfrieren durch Flüssigstickstoff steht in Übereinstimmung mit Patentanspruch 16, wonach die Kontrollinstrumente für die Abgabe (130) die folgenden sind:
a) Schalter für die Aktivierung eines Ventils für die Eingabe des Flüssigstickstoffs in den Phasentrenner (110)
b) Generalschalter für das An- und Ausschalten der Anlage (100);
c) Timer (200) für die Zeitkontrolle des Flusses des Flüssigstickstoffs zu den Düsen (131):
d) Handbetriebener Knopf Aktor (250);
e) Niveauanzeige für den Flüssigstickstoff in dem vakuumwandisolierten Behälter (121) in der Abgabezone (120),
f) Niveauregler (310) für den Flüssigstickstoff in der Abgabezone (120); und
g) Hussmesser (320) für Stickstoffgas

18. Die Anlage für ultraschnelles Einfrieren durch Flüssigstickstoff steht in Übereinstimmung mit Patentanspruch 17, wonach in einem Betriebszyklus eine Entladezeit für Flüssigstickstoff mit dem Timer (200) festgelegt wird; wenn der Operationsknopf (250) gedrückt wird, wird ein Signal übertragen um jedes der elektromagnetischen pneumatischen 5-Weg-Ventile (133) zu aktivieren, das jedem Ventil (135) für die Dosierung zugeordnet ist, und um das Ventil (135) für die Zeitdauerbestimmung zu öffnen, und um das Ventil (135) zu schließen, wenn die Zeit worüber ist, wobei eine exakte Menge Flüssigstickstoff an jeder Düse (131) abgegeben wird.

19. Die Anlage für ultraschnelles Einfrieren durch Flüssigstickstoff steht in Übereinstimmung mit Patentanspruch 1, wonach das Fließband (140) für das einzufrierende Nahrungsprodukt von einem ersten Ende vor der Abgabezone (120), anschließend durch die Abgabezone hindurch (120) und weiter bis zu einem zweigen Ende geht.

20. Die Anlage für ultraschnelles Einfrieren durch Flüssigstickstoff steht in Übereinstimmung mit Patentanspruch 19, wonach das Fließband (140) ein Förderband enthält.

21. Die Anlage für ultraschnelles Einfrieren durch Flüssigstickstoff steht in Übereinstimmung mit Patentanspruch 19, wonach eine Kühlkammer (150) entlang des Fließbandes (140) hergestellt wird mittels isolierender Wände um das Fließband (140) herum, um die Bildung einer stickstoffgasreichen Atmosphäre zu ermöglichen.

22. Die Anlage für ultraschnelles Einfrieren durch Flüssigstickstoff steht in Übereinstimmung mit Patentanspruch 19, wonach das Fließband (140) einen Schlitz (170) in der Nähe des ersten Endes der Kühlkammer (150) hat, und einen anderen Schlitz (170) in der Nähe des zweiten Endes der Kühlkammer (150), durch den das produzierte Stickstoffgas durch Absaugen neben dem Fließband (140) entfernt wird.

23. Die Anlage für ultraschnelles Einfrieren durch Flüssigstickstoff steht in Übereinstimmung mit Patentanspruch 22, wonach das Absaugen durch die Schlitze (160,170) einen Vorhang erzeugt, und die Verbreitung des Stickstoffgases außerhalb der Kühlkammer (150) am zweiten Ende verhindert.

24. Die Anlage für ultraschnelles Einfrieren durch Flüssigstickstoff steht in Übereinstimmung mit Patentanspruch 22, wonach das Stickstoffgas, das in der Kühlkammer (150) erzeugt wird, durch die Kühlkammer (150) geführt wird, und zwar oberhalb und unterhalb des Fließbandes (140).

## Revendications

1. Un dispositif (100) pour la congélation ultra-rapide de denrées alimentaires par azote liquide, qui comprend:
a. un séparateur de phases (110),
b. une valve cryogénique (112) pour alimenter en azote liquide le séparateur de phases,
c. une zone de distribution (120) de l'azote liquide,
d. commandes de contrôle de la zone de distribution (130)
e. un transporteur (140) pour acheminer les produits à congeler vers et hors de la zone de distribution de l'azote du dispositif,
f. une chambre froide (150) comprenant une extrémité par laquelle les produits à congeler entrent, et une deuxième extrémité par laquelle les produits congelés ressortent, et
g. un orifice d'évacuation (160) de l'azote gazeux vers l'atmosphère. Dans ce dispositif, l'azote liquide provient d'un réservoir (500) qui alimente le séparateur de phases (110) sous pression atmosphérique au travers la valve cryogénique (112), créant une phase liquide et une phase gazeuse à partir de l'azote liquide. La phase gazeuse est évacuée dans l'atmosphère ; le transporteur (140) qui transporte les produits à congeler hors de la zone de distribution (120) et ensuite vers la chambre froide (150), où l'azote restant autour des produits est vaporisé pour produire une atmosphère froide dans la chambre froide (150). À l'autre extrémité de la chambre froide (150), l'azote gazeux est évacué vers l'atmosphère par un orifice (160), et le produit congelé sort du dispositif (100) **caractérisé en ce que** l'azote liquide est alimenté vers et maintenu dans un conteneur aux parois isolées sous vide (121) sous pression atmosphérique dans la zone de distribution (120) avant d'être administré au produit à congeler. Le flux d'azote liquide depuis le conteneur aux parois isolées sous vide (121) jusqu'au produit à congeler passe par de multiples buses (131) par simple effet de gravité et est régulé par les commandes de contrôle (130), permettant de doser la quantité d'azote liquide à administrer. Les buses (131) situées près de l'entrée de la chambre froide (150) distribuent l'azote liquide directement sur les produits à congeler, emballés dans leur emballage final, rapidement après leur entrée dans la chambre froide (150).

2. Le dispositif de congélation ultra-rapide des aliments par azote liquide, selon la revendication 1, **caractérisé en ce que** l'azote liquide qui est introduit dans le séparateur de phase (110) est mis sous pression, et la séparation des phases se produit en abaissant la pression jusqu'à la pression atmosphérique.

3. Le dispositif de congélation ultra-rapide des aliments par azote liquide, selon la revendication 1, est **caractérisé en ce que** l'azote liquide provenant du séparateur de phases (110) alimente par gravité le conteneur aux parois isolées sous vide (121) dans la zone de distribution (120).

4. Le dispositif de congélation ultra-rapide des aliments par azote liquide, selon la revendication 3, dans lequel le conteneur aux parois isolées sous vide (121) dans la zone de distribution (120) est **caractérisé par** des doubles parois avec une isolation sous vide.

5. Le dispositif de congélation ultra-rapide des aliments par azote liquide, selon la revendication 3, dans lequel le conteneur aux parois isolées sous vide (121) dans la zone de distribution (120) est **caractérisé par** un fond plat (127).

6. Le dispositif de congélation ultra-rapide des aliments par azote liquide, selon la revendication 5, dans lequel le fond plat (127) dans conteneur aux parois isolées sous vide (121) comporte de multiples orifices de sortie (126), connectés à leurs buses de distribution (131) respectives.

7. Le dispositif de congélation ultra-rapide des aliments par azote liquide, selon la revendication 6, dans lequel les orifices de sortie (126) sont distribués par pair de manière à ce que chaque orifice se situe au centre de chaque cavité qui contient l'aliment à congeler sur un plateau présentant une multiplicité ou pairs de cavités.

8. Le dispositif de congélation ultra-rapide des aliments par azote liquide, selon la revendication 7, dans lequel les orifices de sortie (126) sont disposés sur le fond (127) du conteneur aux parois isolées sous vide (121), de manière à permettre de choisir les orifices (126) et les buses de distribution (131) correspondantes, selon des modèles différents qui correspondent à chaque cavité dans un conteneur avec de multiples cavités contenant l'aliment à congeler, afin de distribuer l'azote liquide au travers de orifices/buses (126/131) sélectionnés.

9. Le dispositif de congélation ultra-rapide des aliments par azote liquide, selon la revendication 8, dans lequel chaque orifice disposé sur le fond (127) du conteneur aux parois isolées sous vide (121), est connecté à sa buse (131) respective pour distribuer de l'azote liquide à l'aliment à congeler, par le biais d'une valve (135), afin de contrôler le passage du flux.

10. Le dispositif de congélation ultra-rapide des aliments par azote liquide, selon la revendication 9, dans lequel le flux de l'azote liquide par chaque buse (131) peut être contrôlé de manière à permettre une distribution de l'azote liquide uniquement par les buses (131) localisées au-dessus des denrées alimentaire à congeler dans un conteneur avec une ou une multiplicité de cavités pour les produits à congeler.

11. Le dispositif de congélation ultra-rapide des aliments par azote liquide, selon la revendication 10, dans lequel le flux d'azote par unité de temps qui passe par chacun des ensembles orifice (126), valve (135) et buse (131), est approximativement identique dans chacun.

12. Le dispositif de congélation ultra-rapide des aliments par azote liquide, selon la revendication 11, dans lequel la quantité d'azote liquide qui circule par chaque buse (131) est déterminée par la durée d'ouverture de la valve cryogénique (135).

13. Le dispositif de congélation ultra-rapide des aliments par azote liquide, selon la revendication 9, dans lequel les valves cryogéniques (135) pour contrôler le flux sont en acier inoxydable.

14. Le dispositif de congélation ultra-rapide des aliments par azote liquide, selon la revendication 9, dans lequel chacune des valves cryogéniques (135) pour contrôler le flux est actionnée par un vérin pneumatique individuel (132).

15. Le dispositif de congélation ultra-rapide des aliments par azote liquide, selon la revendication 9, dans lequel chaque valve cryogénique (135) pour contrôler le flux contient une tige placée en position horizontale, de manière à ce que l'azote liquide s'écoule verticalement lorsque la valve (135) est ouverte.

16. Le dispositif de congélation ultra-rapide des aliments par azote liquide, selon la revendication 14, dans lequel chaque vérin pneumatique individuel (132) est actionné par une valve solénoïde pneumatique à cinq voies (133).

17. Le dispositif de congélation ultra-rapide des aliments par azote liquide, selon la revendication 16, dans lequel les commandes de contrôle (130) de la distribution, incluent:
a. un interrupteur pour actionner une valve pour alimenter le séparateur de phases (110) en azote liquide;
b. un interrupteur général pour allumer et éteindre le dispositif (100) ;
c. un minuteur (200) pour contrôler la durée de distribution d'azote liquide au travers des buses (131);
d. un bouton de commande manuel (250);
e. un indicateur de niveau pour l'azote liquide dans le conteneur aux parois isolées sous vide (121) dans la zone de distribution (120);
f. un régulateur de niveau (310) pour l'azote liquide dans la zone de distribution (120); et
g. un débitmètre (320) pour l'azote gazeux.

18. Le dispositif de congélation ultra-rapide des aliments par azote liquide, selon la revendication 17, **caractérisé en ce que** dans un cycle de fonctionnement, le temps de décharge de l'azote liquide est défini dans le "minuteur" (200), et lorsque l'on presse sur le bouton de déclenchement (250), il y a transmission d'un signal qui actionne chaque vanne solénoïde pneumatique à cinq voies (133) associée à chaque vanne (135) de dosage, qui ouvrira la vanne (135) pendant la période définie dans le "minuteur" et la refermera à la fin de cette période, distribuant ainsi une quantité précise d'azote liquide par chaque buse (131).

19. Le dispositif de congélation ultra-rapide des aliments par azote liquide, selon la revendication 1, dans lequel le transporteur (140) du produit à congeler s'étend d'une première extrémité avant la zone de distribution (120), passe par la zone de distribution (120) et en ressort à l'autre extrémité.

20. Le dispositif de congélation ultra-rapide des aliments par azote liquide, selon la revendication 19, dans lequel le transporteur (140) inclus un convoyeur à bande.

21. Le dispositif de congélation ultra-rapide des aliments par azote liquide, selon la revendication 19, **caractérisé en ce qu'**une chambre froide (150) est créée tout au long du transporteur (140), en isolant les parois qui entourent le transporteur (140) afin de permettre la formation d'une atmosphère riche en azote gazeux.

22. Le dispositif de congélation ultra-rapide des aliments par azote liquide, selon la revendication 19, **caractérisé en ce que** le transporteur (140) présente une fente (160) près de la première extrémité de la chambre froide (150) et une autre fente (170) près de la deuxième extrémité de la chambre froide (150), au travers desquelles l'azote gazeux produit est évacué sous le transporteur (140) par aspiration.

23. Le dispositif de congélation ultra-rapide des aliments par azote liquide, selon la revendication 22, **caractérisé en ce que** l'aspiration par les fentes (160, 170) produit un rideau empêchant la diffusion de l'azote gazeux hors de la chambre froide (150) à la deuxième extrémité.

24. Le dispositif de congélation ultra-rapide des aliments par azote liquide, selon la revendication 22, **caractérisé en ce que** l'azote gazeux produit dans la chambre froide (150) est guidé tout au long de la chambre froide (150), au-dessus et en dessous du transporteur (140).
